# EUROPÄISCHE PATENTSCHRIFT

(11) **EP 0 417 663 B1**
(45) Veröffentlichungstag und Bekanntmachung des Hinweises auf die Patenterteilung: **01.09.1993**
(21) Anmeldenummer: 90117274.2
(22) Anmeldetag: 07.09.1990
(51) Int. Cl.: F16C 11/06, C23F 13/02

(54) **Kugelgelenk für Kraftfahrzeuge mit einer Dichtungsmanschette**
Ball joint with a seal boot for automotive vehicle
Joint à rotule avec soufflet d'étanchéité pour véhicule automobile

(30) Priorität: 14.09.1989 DE 3930741
(43) Veröffentlichungstag der Anmeldung: 20.03.1991
(73) Patentinhaber: LEMFOERDER METALLWAREN AG., D-49441 Lemförde (DE)
(72) Erfinder: Buhl, Reinhard, Dipl.-Ing., D-4508 Bohmte (DE); Kleiner, Wolfgang, Dipl.-Ing., D-2841 Wagenfeld (DE)
(74) Vertreter: Bruse, Willy Hans Heinrich

(56) Entgegenhaltungen:
- EP-A- 0 280 018
- CH-A- 465 971
- FR-A- 2 381 222
- GB-A- 1 477 649
- US-A- 4 146 448

## Beschreibung

Die Erfindung betrifft ein Kugelgelenk für Kraftfahrzeuge, welches eine Dichtungsmanschette aufweist und nach dem Oberbegriff des Patentanspruches 1 ausgebildet ist.

Die Gestaltung der Verbindung des mit Bezug auf das Gehäuse des Kugelgelenkes äußeren Endes der Dichtungsmanschette mit dem Kugelzapfen ist problematisch, weil trotz der Auslenkbewegung und der Drehbewegung des Kugelzapfens gegenüber dem Gehäuse eine sowohl radiale als auch axiale Abdichtung zwischen dem Kugelzapfen und dem Gehäuse erreicht werden muß.

Bei bekannten Ausbildungen weist die Dichtungsmanschette an diesem Ende ein Randprofil aus einer Wulstverdickung mit einer inneren Lagerfläche auf, die unmittelbar an der Mantelfläche des Kugelzapfens oder an einem auf dem Kugelzapfen fest angeordneten Halteringes anliegt und darauf gegebenenfalls durch eigene Materialspannung oder durch die Spannung eines außen aufgesetzten Federringes gehalten wird. Zur Sicherung der axialen Position sind umlaufende Nut-Feder-Ausbildungen bekannt. Mangelhafte Abdichtungen des radialen Dichtungssitzes und auch des axialen Dichtungssitzes führen sehr leicht zu Korrosionen an dem Fahrzeugteil mit dem Lagerauge für die Befestigung des Kugelzapfens und am Kugelzapfen selbst. Die Lebensdauer eines Kugelgelenks hängt somit wesentlich davon ab, in welchem Umfange es gelingt, Korrosionen an dieser Stelle zu vermeiden.

Aus der DE-C- 37 05 847 ist es bekannt, das Randprofil der Dichtungsmanschette am Kugelzapfen in einen festhaftend auf diesem angeordneten Haltering einzusetzen, wobei der Haltering auf der Befestigungsfläche und auf der Stützfläche, mit der er sich gegen ein Fahrzeugteil abstützt, eine Beschichtung aus einem elastischen Werkstoff aufweist.

Aus der GB-A 1,477,649 ist es bekannt, die Dichtungsmanschette aus einem elastisch verformbaren Werkstoff mit dem einen Ende in einer Ringnut am Umfang des Gehäuses zu befestigen und mit einem in axialer Richtung formschlüssigen Profil des anderen Endes in eine Umfangsausnehmung eines auf dem Kugelzapfen haftend angeordneten Stützringes einzusetzen. Dieser Stützring weist eine den Kugelzapfen dicht umschließende Lagerfläche sowie eine dazu radiale Stützfläche auf, die sich gegen das Fahrzeugteil mit dem Lagerauge für die Befestigung des Kugelzapfens ringförmig abstützt. Dadurch kann die Dichtungsmanschette sich mit ihrer Sitzfläche temporär von dem Stützring abheben, damit Luft und überschüssiges Fett aus dem Innenraum der Dichtungsmanschette entweichen kann. Diese Maßnahme ist jedoch nicht auf den Korrosionsschutz gerichtet.

Die CH-A- 465 971 enthält schließlich den Vorschlag, den Stützring, wie er auch aus der DE-C- 37 05 847 bekannt ist, aus einem harten Kunststoff herzustellen, den der Randwulst der Dichtungsmanschette drehbeweglich umschließt, so daß die Gleitfläche zwischen dem Randwulst der Dichtungsmanschette und dem Stützring in einer geschützten Senke angeordnet ist.

Aus "Werkstoffkunde kurz und einprägsam" von E. Baumgartl, 5. Auflage, Leipzig 1976, Seiten 114-116, VEB Fachbuchverlag, ist die Opferanode als Mittel zum kathodischen Korrosionsschutz prinzipiell bekannt.

Es ist Aufgabe der Erfindung, eine möglichst kostengünstige Verbindung des äußeren Endes der Dichtungsmanschette mit dem Kugelzapfen zu schaffen, die gegen Korrosion weitestgehend unempfindlich ist.

Zur Lösung dieser Aufgabe wird eine Ausbildung mit Merkmalen nach dem Kennzeichen des Patentanspruches 1 in Verbindung mit den Merkmalen nach dem Oberbegriff des Patentanspruches 1 vorgeschlagen.

Erreicht wird durch diese Ausbildung ein kathodischer Schutz der tragenden Kraftfahrzeugteile, insbesondere des den Kugelzapfen aufnehmenden Lagerauges und des Kugelzapfens selbst auf der Basis einer klassischen Elektrolyse, in der der Haltering die in Lösung gehende Opferanode, das Lagerauge und der Kugelzapfen die zu schützende Kathode und die umgebende Feuchtigkeit den Elektrolyten bilden.

Nach der Erfindung ist also vorgesehen, daß ein bei dem Kugelgelenk ohnehin notwendiges Bauteil, nämlich der Haltering, als Opferanode ausgenutzt wird. Damit wird erreicht, daß die schädlichen Auswirkungen der Korrosion von dem Kugelzapfen und dem Lagerauge weg zu dem weniger kritischen Haltering hin verlagert wird, welcher jedoch auch bei einem eventuellen Zersetzungsfortschritt lange funktionsfähig bleibt. Dabei ist insbesondere das die Korrosion normalerweise fördernde Salzwasser als ein die kathodische Schutzwirkung begünstigender Elektrolyt wirksam. Der Werkstoff des Halteringes oder wenigstens des sich gegen den Rand des Lagerauges abstützenden Teiles wird auf der Basis der Kenntnis über die elektrochemische Spannungsreihe der Werkstoffe ausgewählt. Geeignet ist auch in diesem Falle vorwiegend Zink. Dieser Werkstoff findet in passiv wirksamen kathodischen Schutzanlagen auf elektrolytischer Basis verbreitet Anwendung.

Bei einer bevorzugten Ausführungsform der Erfindung ist der Haltering im Querschnitt L-förmig ausgebildet, wobei der sich radial erstreckende Schenkel des Halteringes, der gleichzeitig die Stützfläche bildet, die den Rand des Lagerauges berührt, einen von außen nach innen größer werdenden Querschnitt aufweist. Mit zunehmendem Wege der Zersetzung von außen nach innen ändert sich dadurch die Höhe des Querschnitts des zu zersetzenden Ringes und damit das Zersetzungsvolumen, so daß eine Vergrößerung der Zersetzungszeit erreicht wird.

Die Erfindung wird nunmehr anhand eines auf der Zeichnung dargestellten Ausführungsbeispieles erläutert. Auf der Zeichnung zeigen:

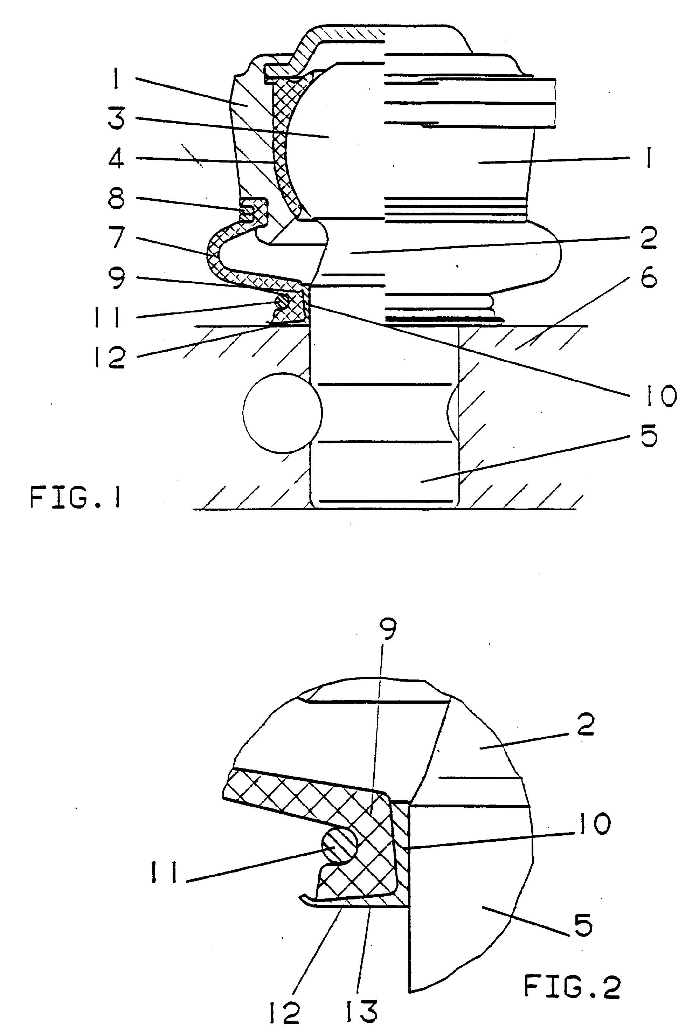

- Figur 1: ein Kugelgelenk teilweise in Seitenansicht und teilweise im Schnitt durch eine Achsebene des Kugelzapfens und
- Figur 2: einen vergrößerten Querschnitt durch den Haltering und des in diesen eingreifenden Randprofils.

Das Kugelgelenk nach dem Ausführungsbeispiel besteht aus dem Gehäuse 1 und dem Kugelzapfen 2, welcher mit einer an seinem einen Ende ausgebildeten Gelenkkugel 3 mittels einer Gelenkschale 4 in das Gehäuse 1 eingesetzt ist. Das Gehäuse 1 ist durch auf der Zeichnung nicht erkennbare Befestigungsmittel mit einem Bauteil eines Kraftfahrzeuges verbindbar, während ein Schaftteil 5 des Kugelzapfens 2 in einem Lagerauge 6 eines anderen Kraftfahrzeugteiles befestigt ist. Zwischen dem Gehäuse 1 und dem Kugelzapfen 2 ist eine Dichtungsmanschette 7 aus einem elastischen Werkstoff vorgesehen, die mit ihrem einen Ende am Gehäuse 1 und mit dem anderen Ende am Kugelzapfen 2 befestigt ist. Die gehäuseseitige Befestigung besteht beispielsweise aus einer Wulstkante am Ende der Dichtungsmanschette 7, die in eine ringsumlaufende Nut am Gehäuse 1 eingreift und darin mittels einer oder mehrerer Federringe 8 gehalten ist.

Am anderen, äußeren Ende der Dichtungsmanschette ist ein Randprofil 9 ausgebildet, welches in einen Haltering 10 eingreift, der im Falle des Beispieles L-förmigen Querschnitt aufweist. Dieser Haltering 10 ist auf das innere Ende des Schaftteiles 5 aufgepreßt, aufgeklebt oder in anderer Weise befestigt. Das Randprofil 9 wird in der durch die Querschnittsform des Halteringes 10 gebildeten Ausnehmung ebenfalls durch einen oder gegebenenfalls auch durch mehrere Federringe 11 gehalten. Der Haltering 10 ist aus Zink oder einem anderen in der elektrochemischen Spannungsreihe gegenüber dem Lagerauge 6 bzw. dem Kugelzapfen 2 geringerwertigen Werkstoff hergestellt. Der sich radial zur Längsachse des Kugelzapfens 2 erstreckende Schenkel 12 des im Querschnitt L-förmigen oder winkelförmigen Halteringes 10 weist die Stützfläche 13 auf, mit der der Haltering sich gegen den Rand des Lagerauges 6 abstützt. Der Querschnitt dieses Schenkels 12 nimmt von außen nach innen stetig zu, so daß die Querschnittshöhe von außen nach innen größer wird. Vor allem dieser Schenkel 12 ist in dem elektrolytischen Prozeß zum kathodischen Schutz der tragenden Bauteile 6 bzw. 2 wirksam, vorwiegend wenn Salzwasser die korrosionsgefährdete Stelle umspült und als Elektrolyt für den kathodischen Schutz genutzt wird. Dabei muß von außen nach innen eine zunehmende Materialhöhe der Opferanode abgetragen werden, so daß das Zersetzungsvolumen von außen nach innen stetig wächst. Anstelle der beschriebenen Herstellung des Halteringes 10 aus Zink kann auch eine Verbundbauweise erfolgen, bei der lediglich der radial gerichtete Schenkel 12 aus einem Werkstoff besteht, der die Wirksamkeit als Opferanode ermöglicht. Dieser Schenkel kann außerdem auch mit einem entsprechenden Werkstoff beschichtet sein.

## Patentansprüche

1. Kugelgelenk für Kraftfahrzeuge, bestehend aus einem Gehäuse (1) und einem Kugelzapfen (2), welcher mit einer an seinem Ende ausgebildeten Gelenkkugel (3) in das Gehäuse (1) eingesetzt ist, mit einer Dichtungsmanschette (7) aus einem elastisch verformbaren Werkstoff, deren eines Ende am Umfange des Gehäuses (1) befestigt ist und deren anderes Ende mit einem Randprofil (9) in ein komplementäres Profil eines auf dem Kugelzapfen (2) festhaftend angeordneten Halteringes (10) drehbeweglich eingreift, wobei der Haltering (10) einen sich radial zum Kugelzapfen (2) erstreckenden Schenkel (12) aufweist, an dem eine Stützfläche ausgebildet ist, mit der der Haltering (10) gegen den Rand eines Lagerauges (6) anliegt, in dem der Kugelzapfen (2) befestigt ist,
**dadurch gekennzeichnet**, **daß**
wenigstens der sich radial erstreckende Schenkel (12) des Halteringes (10) aus einem Werkstoff mit einer in der elektrochemischen Spannungsreihe geringeren Wertigkeit gegenüber dem Werkstoff des Lagerauges (6) und des Kugelzapfens (2) besteht oder mit einem derartigen Werkstoff beschichtet ist und als elektrolytische Opferanode wirksam ist, und daß die Wanddicke des Schenkels (12) von radial außen nach radial innen zunimmt.

2. Kugelgelenk nach Anspruch 1,
**dadurch gekennzeichnet**, **daß**
der Haltering (10) aus Zink besteht.

## Claims

1. Ball-and-socket joint for motor vehicles, comprising a housing (1) and a ball-ended spindle (2), which is inserted with a joint ball (3) formed on its end into the housing (1), having a sealing collar (7) made of an elastically deformable material whose one end is fastened to the periphery of the housing (1) and whose other end engages with an edge profile (9) rotatably into a complementary profile of a retaining ring (10) disposed adhesively on the ball-ended spindle (2), the retaining ring (10) having a limb (12) which extends radially relative to the ball-ended spindle (2) and has, formed thereon, a supporting surface with which the retaining ring (10) rests against the edge of a bearing eye (6) in which the ball-ended spindle (2) is fastened,
characterized in that
at least the radially extending limb (12) of the retaining ring (10) is made of a material with a value further down in the electrochemical series than the material of the bearing eye (6) and of the ball-ended spindle (2) or is coated with such a material and is effective as an electrolytic sacrificial anode, and that the wall thickness of the limb (12) increases radially from the outside inwards.

2. Ball-and-socket joint according to claim 1,
characterized in that
the retaining ring (10) is made of zinc.

## Revendications

1. Joint à rotule pour véhicules automobiles, composé d'un boîtier (1) et d'un tourillon de rotule (2), qui s'insère dans le boîtier (1) par l'intermédiaire d'une rotule (3) d'articulation formée à l'extrémité du tourillon, comprenant un soufflet (7) d'étanchéité réalisé en une matière déformable élastique, l'une des extrémités du soufflet étant fixée sur le pourtour du boîtier (1), et l'autre extrémité du soufflet s'engrenant, de façon à pouvoir tourner, par l'intermédiaire d'un profil marginal (9), dans un profil complémentaire ménagé dans une bague (10) de maintien disposée sur le tourillon de rotule (2) de façon à adhérer à celui-ci, la bague (10) de maintien comprenant une branche (12) s'étendant radialement par rapport au tourillon de rotule (2) et étant configurée avec une face d'appui, par l'intermédiaire de laquelle la bague (10) de maintien s'appuie sur le bord d'un oeil de palier (6) dans lequel est fixé le tourillon de rotule (2),
caractérisé en ce qu'au moins la branche (12) de la bague (10) de maintien, qui s'étend dans le sens radial, est réalisée en une matière dont la valeur selon le système électrochimique des potentiels redox est inférieure à celle des matières de l'oeil de palier (6) et du tourillon de rotule (2), ou en ce qu'elle est garnie d'une telle matière, qu'elle agit comme une anode réactive, et en ce que l'épaisseur de la paroi de la branche (12) augmente radialement de l'extérieur vers l'intérieur.

2. Joint à rotule selon la revendication 1, caractérisé en ce que la bague (10) de maintien est réalisée en zinc.
